# EUROPEAN PATENT APPLICATION

(11) **EP 0 774 608 A1**
(43) Date of publication of application: **21.05.1997**
(21) Application number: 96118250.8
(22) Date of filing: 14.11.1996
(51) Int. Cl.: F16L 1/00, F16L 25/00, F16L 41/02, F16L 7/00, H02G 3/06

(54) **A shunt box assembly with adapters for fitting tubes and/or spiralled sheaths of various diameters**

(30) Priority: 16.11.1995 IT MI952364
(71) Applicant: Dielectrix S.p.A., 20158 Milano (IT)
(72) Inventor: Balzanelli, Vincenzo, 20149 Milano (IT)
(74) Representative: Zavattoni Gusmeroli, Maria Chiara

(57) **Abstract**

A shunt box (12), particularly suitable for tubes or conduits intended for the passage of cables and particularly of the inspectable type, has seats (20) made with a cylindrical mouth portion (21) of a length correlated to a longitudinal dimension of an adapter (14) for rigid tubes or spiralled sheaths. The assembly comprising the shunt box and the adapters can easily be adapted to various types and diameters of tubes, occupying minimal space in use and during storage.

## Description

The invention relates to the field of boxes connections or joints for tubes, particularly tubes used as conduits for cables, especially electric cables. These boxes or shunt means must have particular characteristics corresponding to precise standards concerning the possibility of entry of solid bodies or liquids, protection, etc, The tubes currently on the market for containing and protecting electric cables are generally of a number of types, including rigid plastic tubes and flexible plastic spiralled sheaths.

The prior art comprises openable T-joints made of plastics, apt to receive only rigid conduits. Such joints are made with holes of different diametres, suitable for the tubes or conduits they will receive, and are not fit to receive spiralled flexible sheaths.

Plastic connector or shunt boxes are also known in which portions of wall are defined by easy-break lines so that they can easily be detached to make openings. The threaded end of a joint or connection is blocked in the opening; the end of the connection is fixed by means of a threaded nut applied inside the box. These known boxes have the drawback of requiring a relatively long, laborious and awkward fixing operation, which must be done inside the box and in addition, since the diameter of the opening is pre-set, they do not permit adaptation to tubes of different diameters. Furthermore, they cannot accommodate and secure spiralled sheaths.

The aim of the invention is to overcome the drawbacks of the prior art: in particular to provide a shunt box assembly that can accommodate the ends of both rigid tubes and spiralled sheaths of various diameters and all this with a minimum of parts to be kept in stock and with the utmost ease of use.

These aims have been achieved with a shunt box assembly as stated in claim 1. Further new and useful characteristics are stated in the subsequent claims.

In other words, the new shunt box assembly comprises a shunt box having a plurality of mouths or seats, each seat having, around an opening, a cylindrical wall and, near the proximal end of said cylindrical wall, an inner annular projection; the assembly further comprises adapters for rigid tubes or spiralled sheaths, comprising a neck part provided with an external annular tooth and a tube or sheath housing part provided with a shoulder facing the tooth. The length of the cylindrical wall of the seat is preferably correlated to the distance between the tooth and the shoulder of the adapter.

A shunt box provided with mouths or seats according to what is stated above also forms the subject matter of this application.

The new assembly is easy to use, can be used both with rigid tubes and with spiralled sheaths, can easily be adapted to various diameters of one and the other, and can easily be made in compliance with current standards.

Embodiments of the assembly will be described below purely by way of non-limiting example, with reference to the appended drawings in which:
Figure 1 is a plan view of a shunt box assembly of the invention, with a part shown in a sectional view and an adapter shown in exploded view;
Figure 2 is a view from the left with respect to Figure 1;
Figure 3 is a sectional view taken in a plane along the axis of a seat, illustrating the seat combined with an adapter for a spiralled sheath;
Figure 4 illustrates the seat in combination with an adapter for a spiralled sheath with a smaller diameter, in a view similar to that in Figure 3;
Figure 5 shows a seat of the shunt box in combination with an adapter for a rigid tube, in a section similar to that in Figure 3.

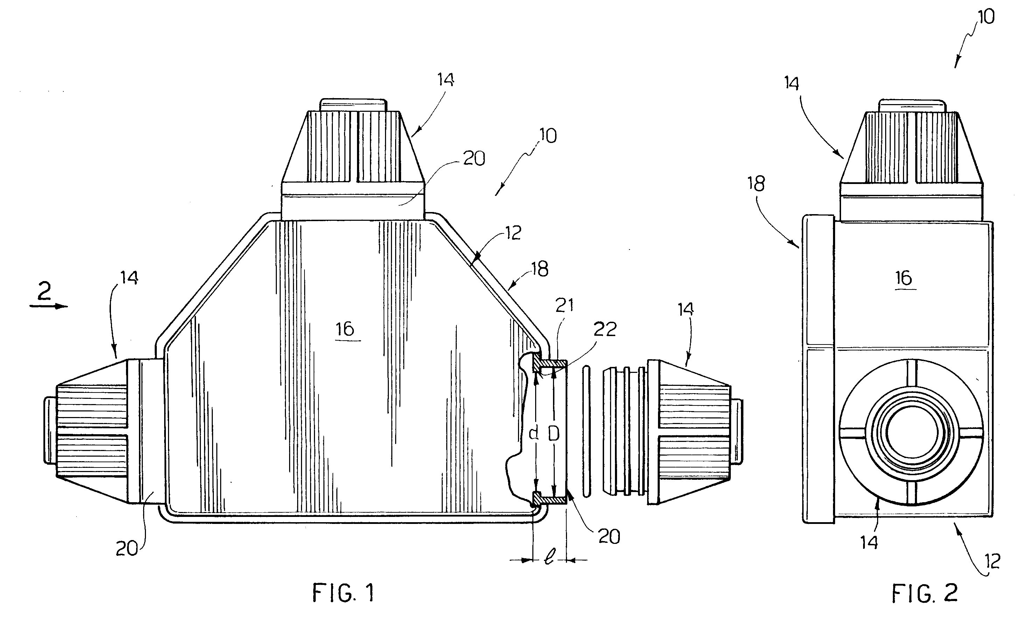

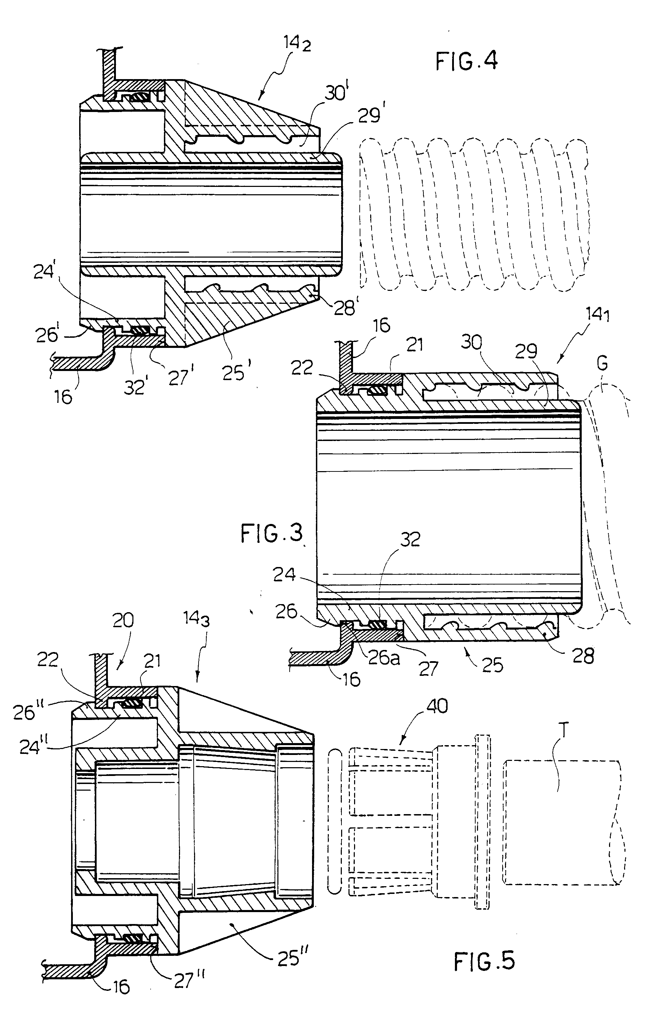

With reference to the figures, a T-shunt box or T-joint assembly is indicated as a whole with reference number 10. Such assembly is only an example and the shunt box of the invention can be of any shape whatsoever, e.g. rectangular, square etc., with any number of connection holes. The assembly comprises a T-shaped shunt box, 12, and a plurality of adapters 14. The T-shaped box 12, generally made of plastic, comprises a body 16 and a cover 18 that can be removed from said body or is hinged on it, to allow inspection of the inside of the box. The box has three mouths or seats arranged substantially to form a T, that is two substantially aligned along the same axis and the third arranged along an axis perpendicular to said first axis. The seats are indicated with the reference number 20, and preferably have the same diameter and the same shape. The seat 20, shown on the right in Figure 1 in an axial sectional view will now be described in greater detail. The seat 20 comprises a cylindrical wall 21 extending axially for a length ℓ. In the exemplary embodiment, wall portion 21 extends from body 16 and lenght ℓ is measured between the inner wall of the box and the outer wall of cylindrical portion 21. It is however possible that portion 21 extends inwardly of body 16. Near the inner end of the portion 21, an annular projection 22 extends inwards. In the figures D indicates the inner diameter of the cylindrical portion 21 and d the inner diameter of the annular projection 22. In combination with the T-box assembly 10 thus described a plurality of adapters 14 are provided, some of which are described below with reference to Figures 3 to 5. The adapter 14₁ visible in Figure 3 comprises a stem or neck part 24 and housing part 25 integral with each other. The neck part has at least one portion with an outer diameter equal to or smaller than d and an annular or part-annular end tooth 26, with a diameter greater than d. The housing part 25 has a circular outer shoulder 27. The distance between the shoulder 26ₐ of the tooth 26 and the facing shoulder 27 of the housing part is correlated to the length ℓ of the cylindrical portion of each seat 20, and is preferably substantially equal to it. The housing part comprises a cylindrical outer wall 28 and a cylindrical inner wall 29 coaxial to said outer wall and at a distance from it, so as to define with it a substantially cylindrical housing 30. The wall 28 has a threaded inner surface with the same thread as the spiralled sheath to be accommodated. The neck 24 preferably has projecting annular ribs on the outside, spaced out axially, to accommodate a sealing or retaining ring 32, to provide a seal against the cylindrical wall 21.

The assembly is easily assembled by adapting to each other the adapter 14₁ and an end of a spiralled sheath G shown by dash lines in Figure 3 and snapping the neck 24 of the adapter inside the seat 20; this means that the tooth 26 snaps over the projection 22 and is disposed in a retained position beyond it, this being allowed by the elasticity of the material used for the box or the adapter or both.

The adapter shown in Figure 4 and referenced 14₂ is a variant of adapter 14₁ in Figure 3, for spiralled sheaths with a smaller diameter. The parts of the adapter in Figure 4 corresponding to those of the adapter in Figure 3 have the same reference numbers with a prime. In particular, the adapter 14₂ comprises a neck-shaped engaging part, 24 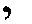 , the size and shape of which substantially correspond to the neck part 24 in the embodiment in Figure 3, and an engaging part 25 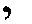 that has a threaded annular housing 30 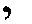 , with a substantially smaller diameter than the housing 30. The inner wall 29 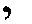 defining this housing on the inside preferably extends beyond the shoulder 27 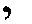 and up to the tooth 26 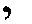 , but could also extend only up to the shoulder 27 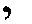 . A retaining/sealing ring 32 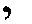 corresponds to the retaining/sealing ring 32 in Figure 3.

As regards the adapter 14₃ in Figure 5, the parts of it that correspond to those of the adapter 14₁ in Figure 3 have the same reference numbers with a double prime. The adapter 14₃ comprises a neck part 24 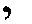 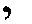 with an end tooth 26 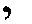 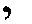 ; a housing part 25 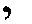 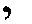 is in the form of a cylindrical wall the inner surface of which flares out from the mouth towards the inside of shunt box, to accommodate a ring 40 of the adapter, provided with wedge-shaped elastic wings, *per se* known and therefore not further described. The rigid tube T is inserted into the winged ring 40 and into the adapter 14₃ where it remains blocked by the wedge-shaped wings, preventing it from being pulled out. The adapter is then inserted into the seat 20 of the shunt box.

It will be seen that in this way rigid tubes and spiralled sheaths of different diameters can be easily applied to a same shunt box. It will also be noted that it is sufficient to keep only one type of box and adapters of various types in stock so that the box assembly can be assembled with a wide range of tubes and sheaths.

## Claims

1. A shunt box assembly characterized in that it comprises: a shunt box (12) provided with seats (20) each having a portion (21) of cylindrical wall around an opening and a substantially annular retaining projection (22) near the proximal end of said portion of cylindrical wall
adapters (14) each comprising a neck part (24) suitable to be accommodated and retained in a said seat and a housing part (25) to accommodate and retain a tube or a spiralled sheath.

2. An assembly according to claim 1 characterized in that each of said adapters has a retaining tooth (26) with tooth shoulder (26a) and a facing shoulder (27) of the housing part (25), the distance between the facing surfaces of the tooth shoulder and of the housing part shoulder and the distance or length (ℓ) between the inner wall and the outer wall of the cylindrical portion (21) of the seat being correlated so that the cylindrical portion of the seat is accommodated between said shoulders.

3. An assembly according to claim 2 characterized in that said length (ℓ) is substantially equal to said distance between the shoulders.

4. An assembly according to claim 1 characterized in that the housing part (25; 25 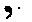 ) of the adapter comprises two coaxial cylindrical walls (28,29; 28 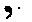 , 29 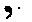 ) set at a distance from each other, the outer wall (28; 28 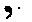 ) having the inward facing surface threaded to correspond to the thread of a spiralled sheath (G) to be accommodated.

5. An assembly according to claim 1 characterized in that the adapter has the housing part (25 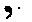 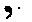 ) consisting of a cylindrical wall provided with an internally flaring portion, with the largest base towards the part intended to be towards the box, and a ring (40) with wedge-shaped locking wings to accommodate and block a rigid tube (T).

6. A shunt box comprising openings for connection to tubes characterized in that at each opening it has a seat comprising a cylindrical portion extending outside and/or inside the box and, near the inner end of said protrusion, an annular projection extending inwardly of the cylindrical portion.

7. A shunt box according to claim 6 characterized in that said annular projection has a relative elasticity.

8. An adapter for use in an assembly as claimed in claim 1 characterized in that it comprises a housing portion (25; 25') comprising two spaced coaxial cylindrical walls (28,29; 28', 29'), an external wall (28,28') of the two walls having its inwardly facing face threaded to match the thread of a spiralled sheat to be received.

9. An adapter for use in an assembly as claimed in claim 1 characterized in that it comprises a housing part (25'') comprising a cylindrical portion having an internally flaring portion, and a ring (40) having wedge-shaped locking wings.
